# EUROPÄISCHE PATENTANMELDUNG

(11) **EP 4 516 617 A1**
(43) Veröffentlichungstag der Anmeldung: **05.03.2025**
(21) Anmeldenummer: 23193842.4
(22) Anmeldetag: 29.08.2023
(51) Int. Cl.: B61C 9/50, B60K 1/00, B60K 11/06, H02K 9/04

(54) **DREHGESTELL FÜR EIN SCHIENENFAHRZEUG MIT ZWEI LÄNGSTRÄGERN, EINEM FAHRMOTOR UND EINER KÜHLUNGSVORRICHTUNG SOWIE SCHIENENFAHRZEUG MIT MINDESTENS EINEM DREHGESTELL**

(71) Anmelder: Stadler Rail AG, 9565 Bussnang (CH)
(72) Erfinder: Falke, Ewald, 900 St. Gallen (CH)
(74) Vertreter: Hepp Wenger Ryffel AG

(57) **Zusammenfassung**

Die Erfindung betrifft ein Drehgestell (10) für ein Schienenfahrzeug (29). Das Drehgestell (10) umfasst einen Drehgestellrahmen (11) mit zwei Längsträgern (8), einen Fahrmotor (1) mit einer Motorwelle (15) sowie eine Kühlungsvorrichtung (14). Durch die Kühlungsvorrichtung (14) ist der Fahrmotor (1) kühlbar. Der Fahrmotor (1) ist zwischen den Längsträgern (8) angeordnet. Die Kühlungsvorrichtung (14) umfasst einen Ventilator (2) und einen Ventilatorantrieb (4). Der Ventilatorantrieb (4) kann als elektrischer Permanentmagnetmotor ausgebildet sein. Die Kühlungsvorrichtung (14) ist zwischen den Längsträgern (8) angeordnet.

Die Erfindung betrifft ausserdem ein Schienenfahrzeug (29) mit einem Drehgestell (10) wie vorhergehend beschrieben.

## Beschreibung

Die vorliegende Erfindung betrifft ein Drehgestell für ein Schienenfahrzeug mit zwei Längsträgern, einem Fahrmotor und einer Kühlungsvorrichtung sowie ein Schienenfahrzeug mit mindestens einem Drehgestell.

Motordrehgestelle mit zu kühlenden Traktionsmotoren sind aus dem Stand der Technik bekannt. Beispielsweise offenbaren EP 3 472 020 sowie EP 2 695 791 Motordrehgestelle mit zu kühlenden Traktionsmotoren. Diese Motordrehgestelle sind jedoch mit sperrigen und voluminösen Kühlvorrichtungen ausgestattet. Somit beanspruchen derartige Drehgestelle einen grossen Bauraum. Aus dem Stand der Technik bekannt sind auch Drehgestelle mit Fahrmotoren, die durch Kühlvorrichtungen gekühlt werden, die ausserhalb der Drehgestelle angeordnet sind. Ein solches Drehgestell ist beispielsweise aus DE 3118055 bekannt. Bei einer solchen Konfiguration sind Luftschächte und Luftöffnungen in den Seitenwänden des Schienenfahrzeugs, im Bereich der Dachschräge des Schienenfahrzeugs oder auf dem Dach selbst notwendig. Aus diesem Grund benötigen auch derartige Drehgestelle bzw. Kühlvorrichtungen einen grossen Bauraum.

Aus dem Stand der Technik bekannt sind auch Drehgestelle, bei denen eine Kühlvorrichtung direkt auf der Motorwelle angeordnet und mit der Motorwelle verbunden ist. Eine derartige Anordnung ist beispielsweise aus der EP 1 100 184 bekannt. Da derartige Ventilatoren direkt mit der Motorwelle verbunden sind, ist die Drehzahl des Ventilators identisch mit der Drehzahl des Motors. Die Traktionsmotoren können so nicht bedarfsorientiert gekühlt werden. Bei derartigen Vorrichtungen ergibt sich somit bei der höchsten Drehzahl des Motors mechanisch notwendigerweise die grösste Luftfördermenge. Dadurch ergeben sich eine starke Lärmentwicklung und hohe mechanische Verluste.

Aus dem Stand der Technik bekannt sind auch selbst ventilierte Motoren mit einem vom Traktionsmotor unabhängig angetriebenen Lüfter. Derartige Vorrichtungen werden in der EP 1 109 297 bzw. in der EP 3 819 148 offenbart. In diesen Dokumenten ist allerdings die Kühlvorrichtung nicht auf dem Drehgestell angeordnet. Somit sind auch diese Vorrichtungen aufwändig konstruiert, weisen viele Leitungen auf und benötigen einen grossen Bauraum.

Die aus dem Stand der Technik bekannten Motordrehgestelle haben somit den Nachteil, dass sie keine bedarfsgerechte Kühlung für den Motor ermöglichen und/oder dass sie einen sehr grossen Bauraum benötigen.

Es ist die Aufgabe der Erfindung, die Nachteile des Standes der Technik zu überwinden und insbesondere ein Drehgestell für ein Schienenfahrzeug zu schaffen, bei dem der Motor bedarfsgerecht gekühlt werden kann und welches einen geringen Bauraum benötigt.

Die Aufgabe wird durch ein Drehgestell für ein Schienenfahrzeug mit zwei Längsträgern, einem Fahrmotor und einer Kühlvorrichtung sowie durch ein Schienenfahrzeug mit mindestens einem Drehgestell gemäss den unabhängigen Patentansprüchen gelöst.

Insbesondere wird die Aufgabe gelöst durch ein Drehgestell für ein Schienenfahrzeug. Das Drehgestell umfasst einen Drehgestellrahmen mit zwei Längsträgern und einen Fahrmotor mit einer Motorwelle. Der Fahrmotor ist zwischen den Längsträgern angeordnet. Ausserdem umfasst das Drehgestell eine Kühlungsvorrichtung, durch welche der Fahrmotor kühlbar ist. Die Kühlungsvorrichtung umfasst einen Ventilator und einen von einer Drehzahl der Motorwelle unabhängig betreibbaren Ventilatorantrieb. Die Kühlungsvorrichtung ist zwischen den Längsträgern angeordnet. Der Ventilatorantrieb kann als elektrischer Permanentmagnetmotor ausgebildet sein.

In einem solchen Drehgestell kann der Motor bedarfsgerecht gekühlt werden. Ausserdem weist ein solches Drehgestell einen geringen Bauraum auf. Bevorzugt weist das Drehgestell vier Räder und mindestens zwei Radsatzachsen auf. Die Motorwelle und die Ventilatorwelle sind nicht mechanisch verbunden, so dass auf einem solchen Drehgestell der Ventilator und der Ventilatorantrieb unabhängig von dem Fahrmotor und der Motorwelle betreibbar ist. Somit können die Motorwelle und der Fahrmotor mit einer ersten Drehzahl betrieben werden und der Ventilatorantrieb kann mit einer anderen, bedarfsgerechten zweiten Drehzahl betrieben werden. Der Fahrmotor kann eine Baulänge axial in Richtung seiner Motorwelle von 50 cm - 75 cm aufweisen. Dass der Fahrmotor und die Kühlungsvorrichtung zwischen den Längsträgern angeordnet ist bedeutet, dass der Fahrmotor und die Kühlungsvorrichtung in der Draufsicht auf das ordnungsgemäss angeordnete Drehgestell zwischen den Längsträgern angeordnet ist.

Der Energie- und Leistungsbedarf einer solchen Kühlvorrichtung ist deutlich gesenkt, da die nötige Luftmenge nicht durch längere Kanäle und hemmende Biegungen der Kanäle behindert wird. Dadurch kann eine solche Kühlvorrichtung vorteilhaft dimensioniert werden und auf einem Schienenfahrzeug muss weniger Energie für die Kühlungsvorrichtung zur Verfügung gestellt werden. Der Ventilatorantrieb kann einen konventionellen Asynchronmotor umfassen. Der Ventilatorantrieb kann auch einen Permanentmagnetmotor umfassen. Wenn der Ventilatorantrieb als Permanentmagnetmotor ausgebildet ist, kann der Ventilatorantrieb sehr klein und effizient gebaut werden.

Die Motorwelle kann eine erste Rotationsachse aufweisen und der Ventilator kann eine zweite Rotationsachse aufweisen. Die erste Rotationsachse und die zweite Rotationsachse können im Wesentlichen orthogonal zur Fahrtrichtung ausgebildet sein. Die erste Rotationsachse und die zweite Rotationsachse können parallel beabstandet ausgebildet sein. Die erste Rotationsachse und die zweite Rotationsachse können identisch ausgebildet sein.

Es ist möglich, dass die erste Rotationsachse und die zweite Rotationsachse in Fahrtrichtung nacheinander in der gleichen Ausrichtung angeordnet sind. Dass die erste Rotationsachse und die zweite Rotationsachse identisch ausgebildet sind bedeutet, dass die erste Rotationsachse und die zweite Rotationsachse fluchtend ausgebildet sind.

Durch eine derartige Anordnung kann das Drehgestell kompakt und stabil gefertigt werden. Durch eine Anordnung im Wesentlichen orthogonal zur Fahrtrichtung ist eine vorteilhafte Kraftübertragung von der Motorwelle auf den weiteren Antriebsstrang möglich.

Auch wenn die erste Rotationsachse und die zweite Rotationsachse identisch ausgebildet sind, können sich die Motorwelle und der Ventilator unabhängig voneinander mit einer unterschiedlichen Drehzahl drehen. Die Motorwelle und der Ventilator sind mechanisch somit nicht unmittelbar verbunden, auch wenn die erste Rotationsachse und die zweite Rotationsachse identisch sind. Es ist somit möglich, dass selbst wenn die erste Rotationsachse und die zweite Rotationsachse identisch sind, die Motorwelle eine erste Drehzahl aufweist und der Ventilator eine davon unterschiedliche zweite Drehzahl aufweist.

Es ist möglich, dass der Fahrmotor und/oder der Ventilator und/oder der Ventilatorantrieb zumindest teilweise zwischen zwei Rädern einer Achse des Drehgestells angeordnet sind.

Durch eine derartige Anordnung kann das Drehgestell einfach und kompakt gebaut werden und die Kraftübertragung von dem Fahrmotor auf die Räder ist unkompliziert und effizient möglich. Ausserdem kann so das Gewicht des Fahrmotors und/oder des Ventilators und/oder des Ventilatorantriebs vorteilhaft über die Räder auf die Schienen abgeleitet werden und die entsprechenden Bauteile können vorteilhaft dimensioniert werden.

Zwischen den Rädern bedeutet, dass sich die Kühlungsvorrichtung und die Räder in einer Richtung im Wesentlichen orthogonal zur Fahrtrichtung in Ihrer Kontur zumindest teilweise überschneiden.

Es ist möglich, dass der Ventilatorantrieb orthogonal zur Fahrtrichtung näher an einem der Räder angeordnet ist als der Fahrmotor und der Ventilator.

Der Ventilatorantrieb ist somit an einer Aussenseite der Bauteile und nicht zwischen dem Fahrmotor und dem Ventilator angeordnet. Durch eine derartige Anordnung des Ventilatorantriebs wird gewährleistet, dass sich der Ventilatorantrieb nicht zu stark erwärmt. Der Ventilator wird durch den Ventilatorantrieb angetrieben und die Luft wird durch den Ventilator von dem Fahrmotor zu dem Ventilator und anschliessend zu dem Ventilatorantrieb bewegt. Somit kühlt der Ventilator nicht nur den Fahrmotor, sondern auch den Ventilatorantrieb.

Es ist möglich, dass das Drehgestell ein Getriebe aufweist, welches die Motorwelle und die mindestens eine Radsatzwelle mechanisch wirkverbindet. Der Fahrmotor und der Ventilator können orthogonal zur Fahrtrichtung zwischen dem Ventilatorantrieb und dem Getriebe angeordnet sein.

Eine derartige Anordnung ermöglicht eine gute Kühlung des Motors und eine platzsparende und effiziente Übertragung eines Drehmoments von dem Fahrmotor auf die Radsatzwelle durch das Getriebe.

Bei dem Getriebe kann es sich um ein Zahnradgetriebe handeln.

Es ist möglich, dass die Kühlungsvorrichtung durch einen Kühlungsumrichter mit elektrischem Strom beaufschlagbar ist.

Durch eine derartige Anordnung eines Kühlungsumrichters ist es möglich, die Kühlungsvorrichtung unabhängig von dem Motor zu betreiben. Ausserdem kann der Kühlungsumrichter unabhängig von anderen Bauteilen repariert oder ausgetauscht werden. Der Kühlungsumrichter kann auf dem Drehgestell ausgebildet sein. Es ist auch möglich, dass der Kühlungsumrichter nicht auf dem Drehgestell ausgebildet ist.

Es ist möglich, dass ein Drehgestell mehrere Kühlungsvorrichtungen aufweist, wobei pro Kühlungsvorrichtung jeweils ein Kühlungsumrichter ausgebildet ist.

So ist es möglich, jede Kühlungsvorrichtung eines Drehgestells oder eines Schienenfahrzeugs individuell mit Energie zu versorgen und unabhängig zu betreiben, wenn in einem Drehgestell oder in einem Schienenfahrzeug mehrere Kühlungsvorrichtungen vorgesehen sind. Es ist somit nicht notwendig, einen zentralen Umrichter für sämtliche Ventilatorantriebe vorzuhalten.

Es ist möglich, dass jede Kühlungsvorrichtung einem Fahrmotor zugeordnet ist. Dann kann jeder Fahrmotor, dem eine Kühlungsvorrichtung zugeordnet ist, individuell gekühlt werden. Somit ist es möglich, dass die Fahrmotoren mit einer unterschiedlichen Last eingesetzt werden und dann entsprechend der jeweiligen Last des Fahrmotors gekühlt werden. Dadurch wird der gesamte Energiebedarf für die Kühlung der Motoren des Schienenfahrzeugs verringert.

Es ist möglich, dass der Fahrmotor in einem Motorgehäuse angeordnet ist und dass der Ventilator und der Ventilatorantrieb in einem Kühlungsgehäuse angeordnet sind. Das Motorgehäuse ist mit dem Kühlungsgehäuse fluidtechnisch verbunden, wobei das Kühlungsgehäuse lösbar an dem Motorgehäuse angeflanscht ist.

Wenn Defekte in der Kühlung auftreten, kann somit das gesamte Kühlungsgehäuse der Kühlvorrichtung mit dem Ventilator und dem Ventilatorantrieb von dem Motorgehäuse entfernt werden. Somit ist es möglich, eine funktionierende, andere Kühlvorrichtung mit einem anderen Kühlungsgehäuse an die Motorgehäuse anzubringen. Dann ist das Schienenfahrzeug mit dem Drehgestell schnell wieder einsatzbereit und die Reparaturzeit ist minimiert.

Ausserdem ist es möglich, die Kühlungsvorrichtung an einem anderen Ort zu reparieren, wo möglicherweise Spezialwerkzeug zur Verfügung steht. Durch die Ausbildung eines Kühlungsgehäuses und eines Motorgehäuses ist das Drehgestell somit besonders wartungsfreundlich und bei einem Defekt rasch wieder einsetzbar.

Es ist möglich, dass das Kühlungsgehäuse einen axialen Lufteinlass und einen radialen Luftauslass aufweist.

Auf diese Weise kann die Luft vorteilhaft von den Ventilatorblättern eingesaugt und ausgestossen werden.

Der Lufteinlass kann mit einem Filter versehen sein. Es ist möglich, dass der Lufteinlass und/oder der Luftauslass mehrere schlitzförmige Öffnungen aufweist. Es ist auch möglich, dass der Lufteinlass und/oder der Luftauslass mehrere ovale oder runde Öffnungen aufweist.

Es ist möglich, dass die Längsträger in einer Richtung axial entlang der Motorwelle eine maximale Ausdehnung von 2.4-mal bis 3.6-mal der Ausdehnung des Fahrmotors in einer Richtung axial entlang der Motorwelle aufweisen. Es ist möglich, dass die Längsträger in einer Richtung axial entlang der Motorwelle eine maximale Ausdehnung von 2.6-mal bis 3.4-mal der Ausdehnung des Fahrmotors in einer Richtung axial entlang der Motorwelle aufweisen.

Die Ausdehnung des Fahrmotors umfasst nicht die Ausdehnung des Getriebes, die Ausdehnung einer Motor-Getriebekupplung oder die Ausdehnung von Bremszangen.

Durch eine derartige Ausbildung ist gewährleistet, dass neben dem Fahrmotor auch die Kühlungsvorrichtung zwischen den Längsträgern angeordnet werden kann.

Es ist möglich, dass das Drehgestell mindestens einen Sensor umfasst, mit dem die Temperatur des Fahrmotors feststellbar ist. Der Temperatursensor kann an dem Motorgehäuse und/oder an einem Rotor des Fahrmotors und/oder an einem Stator des Fahrmotors angeordnet ist. Das Drehgestell kann eine Ventilatorsteuerung umfassen. Die Steuerung kann mit dem Ventilatorantrieb und mit dem Temperatursensor datentechnisch verbunden sein. Dann ist es möglich, die Drehzahl des Ventilators abhängig von den Messdaten des Temperatursensors zu steuern.

Die Aufgabe der Erfindung wird ausserdem durch ein Schienenfahrzeug mit mindestens einem Drehgestell wie vorhergehend beschrieben gelöst.

Ein derartiges Schienenfahrzeug weist im Wesentlichen die gleichen Vorteile auf wie ein Drehgestell wie vorhergehend beschrieben.

Es ist möglich, dass jedes Drehgestell des Schienenfahrzeugs wie ein Drehgestell wie vorhergehend beschrieben ausgebildet ist. Es ist auch möglich, dass das Schienenfahrzeug angetriebene Schienenfahrzeugwagen umfasst, welche mit einem Drehgestell wie vorhergehend beschrieben ausgestattet sind sowie mit nicht angetriebene Schienenfahrzeugwagen, welche mit nichtangetriebenen Drehgestellen ausgebildet sind. Die angetriebenen Wagen des Schienenfahrzeugs können Endwagen sein. Es ist auch möglich, dass die angetriebenen Schienenfahrzeugwagen des Schienenfahrzeugs Mittelwagen sind und die Endwagen nicht angetrieben sind. Denkbar ist auch, dass ein Schienenfahrzeugwagen ein Drehgestell wie vorhergehend beschrieben umfasst und ein nicht angetriebenes Drehgestell.

Die Erfindung wird in den folgenden Figuren näher erläutert. Es zeigen:
- Figur 1:: Einen Fahrmotor mit einer Kühlungsvorrichtung,
- Figur 2:: ein Drehgestell mit einem Fahrmotor und einer Kühlungsvorrichtung,
- Figur 3:: einen Schienenfahrzeugwagen mit zwei Drehgestellen,
- Figur 4:: ein Schienenfahrzeug mit zwei Schienenfahrzeugwagen und einer Kupplung.

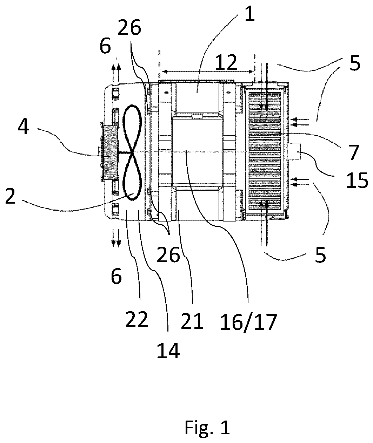

Die Figur 1 zeigt einen Fahrmotor 1 mit einer Kühlungsvorrichtung 14. Die Kühlungsvorrichtung 14 weist einen Ventilator 2 sowie einen Ventilatorantrieb 4 auf. Die Kühlungsvorrichtung 14 mit dem Ventilator 2 und dem Ventilatorantrieb 4 ist in einem Kühlungsgehäuse 22 angeordnet. Der Fahrmotor 1 weist eine Motorwelle 15 auf. Der Fahrmotor 1 ist in einem Motorgehäuse 21 angeordnet. Die Motorwelle 15 weist eine erste Rotationsachse 16 auf. Der Ventilator 2 weist eine zweite Rotationsachse 17 auf. Die erste Rotationsachse 16 der Motorwelle 15 ist identisch mit der zweiten Rotationsachse 17 des Ventilators 2. Das Kühlungsgehäuse 22 ist mittels mehrerer Schrauben 26 an dem Motorgehäuse 21 angeflanscht. Das Kühlungsgehäuse 22 mit dem Ventilatorantrieb 4 und dem Ventilator 2 kann somit durch eine Lösung der Schrauben 26 von dem Motorgehäuse 21 einfach demontiert werden. Es ist somit möglich, dass eine Kühlvorrichtung 14 von dem Fahrmotor 1 entfernt und in einer Werkstatt repariert wird, während eine weitere Kühlvorrichtung 14 sofort nach der Demontage der ersten Kühlvorrichtung 14 an dem Fahrmotor 1 befestigt wird. Die Kühlvorrichtung 14 kann somit schnell ausgetauscht werden und das Schienenfahrzeug (nicht dargestellt) kann schnell wieder in Betrieb genommen werden, während die Kühlungsvorrichtung 14 in einer Werkstatt gewartet wird und das Schienenfahrzeug mit einer weiteren Kühlungsvorrichtung 14 betrieben wird. Das Kühlungsgehäuse weist Luftauslässe 6 auf. Die Luftauslässe 6 sind radial zur ersten Rotationsachse 16 und radial zur zweiten Rotationsachse 17 in dem Kühlungsgehäuse 22 ausgebildet. Im Bereich der Lufteinlässe 5 ist in dem Motorgehäuse 21 ein Luftfilter 7 angeordnet. In dem Bereich des Luftfilters 7 weist das Motorgehäuse 21 Lufteinlässe 5 auf, durch die Luft aus der Umgebung in den Luftfilter 7 strömen kann. Die Lufteinlässe 5 des Motorgehäuses 21 sind sowohl axial als auch radial angeordnet. Die Motorwelle 15 durchdringt den Luftfilter 7. Somit ist der Luftfilter 7 zumindest teilweise um die Motorwelle 15 angeordnet. Der Fahrmotor 1 weist eine Baulänge 12 auf. Die Baulänge 12 bemisst sich axial entlang der ersten Rotationsachse 16. Axial entlang der ersten Rotationsachse 16 sind die Bauteile somit in der folgenden Reihenfolge aufgebaut: Ventilatorantrieb 4, Ventilator 2, Fahrmotor 1, Luftfilter 7. Die Luft wird von dem Ventilator 2 der Kühlungsvorrichtung 14 in dem Kühlungsgehäuse 22 von den Lufteinlässen 5 in den Luftfilter 7 in das Motorgehäuse 21 vorbei an dem Fahrmotor 1 in das Kühlungsgehäuse 22 gesaugt und wird anschliessend von dem Ventilator 2 in radialer Richtung der ersten Rotationsachse 16 und der zweiten Rotationsachse 17 aus dem Kühlungsgehäuse 22 ausgestossen. Der Ventilator 2 saugt somit die Luft in einer Richtung axial und in einer Richtung radial der ersten Rotationsachse 16 und der zweiten Rotationsachse 17 durch die Lufteinlässe 5 des Motorgehäuses 5 an. Anschliessend saugt der Ventilator 2 die Luft in einer axialen Richtung im Wesentlichen parallel zu der ersten Rotationsachse 16 und der zweiten Rotationsachse 17 durch das Kühlungsgehäuse 22 vorbei an dem Fahrmotor 1 und stösst die Luft durch die Luftauslässe 6 in einer Richtung radial zur ersten Rotationsachse 16 und zur zweiten Rotationsachse 17 aus den Luftauslässen 6 des Kühlungsgehäuses 22 aus.

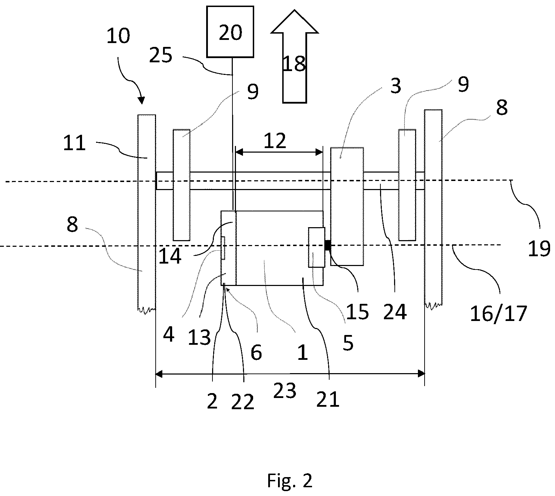

Die Figur 2 zeigt ein Drehgestell mit einem Fahrmotor 1 sowie einer Kühlungsvorrichtung 14. Der Fahrmotor 1 ist in einem Motorgehäuse 21 angeordnet. Die Kühlungsvorrichtung 14 umfasst einen Ventilator 2 sowie einen Ventilatorantrieb 4. Die Kühlungsvorrichtung 14 ist in einem Kühlungsgehäuse 22 ausgebildet. Der Fahrmotor 1 ist in einem Motorgehäuse 21 ausgebildet. Das Kühlungsgehäuse 22 ist an das Motorgehäuse 21 angeflanscht. Der Fahrmotor 1 in dem Motorgehäuse 21 weist eine Baulänge 12 auf. Die Baulänge 12 bemisst sich in einer Richtung axial entlang der ersten Rotationsachse 16 sowie der zweiten Rotationsachse 17. Die erste Rotationsachse 16 sowie die zweite Rotationsachse 17 sind identisch. An dem Fahrmotor 1 ist eine Motorwelle 15 ausgebildet. Die Motorwelle 15 verbindet den Fahrmotor 1 wirktechnisch mit dem Getriebe 3. Die Kühlungsvorrichtung 14 in dem Kühlungsgehäuse 22, der Fahrmotor 1 in dem Motorgehäuse 21 sowie das Getriebe 3 sind zwischen den Längsträgern 8 des Drehgestellrahmens 11 des Drehgestells 10 angeordnet. Ausserdem sind die Kühlungsvorrichtung 14 in dem Kühlungsgehäuse 22 sowie der Fahrmotor 1 in dem Motorgehäuse 21 sowie das Getriebe 3 zwischen den Rädern 9 angeordnet. Zwischen den Rädern bedeutet, dass sich die Kühlungsvorrichtung 14 und die Räder 9 in einer Richtung im Wesentlichen orthogonal zur Fahrtrichtung 18 in Ihrer Kontur zumindest teilweise überschneiden. Die Bauteile sind dabei in einer Richtung axial entlang der ersten Rotationsachse 16 sowie der zweiten Rotationsachse 17 in der folgenden Reihenfolge ausgebildet: Kühlungsgehäuse 22 mit dem Ventilatorantrieb 4 sowie dem Ventilator 2, Motorgehäuse 21 mit dem Fahrmotor 1, Getriebe 3. Der Ventilator 2 ist zwischen dem Ventilatorantrieb 4 und dem Fahrmotor 1 angeordnet. Die Längsträger weisen in einer Richtung axial der ersten Rotationsachse 16 sowie der zweiten Rotationsachse 17 einen Abstand 23 auf. Der Abstand 23 beträgt 205 cm. Die Baulänge des Fahrmotors 12 beträgt 65 cm. Der Abstand 23 ist somit rund 3.2 mal so gross die die Baulänge des Fahrmotors 12. Für innengelagerte Drehgestelle sind diese Verhältnisse selbstverständlich anzupassen. Das Getriebe 3 verbindet die Motorwelle 15 mit der Radsatzwelle 24 mechanisch. Die Radsatzwelle 24 weist eine dritte Rotationsachse 19 auf. Die dritte Rotationsachse 19 ist parallel zur ersten Rotationsachse 16 und zur zweiten Rotationsachse 17 ausgebildet und sowohl die erste Rotationsachse 16 als auch die zweite Rotationsachse 17 und die dritte Rotationsachse 19 sind orthogonal zur Fahrtrichtung 18 ausgebildet. Die Radsatzwelle 24 ist mechanisch mit den Rädern 9 verbunden. Die Radsatzwelle 24 ist in den Längsträgern 8 des Drehgestellrahmens 11 des Drehgestells 10 gelagert. Die Räder 9 sind zwischen den Längsträgern 8 angeordnet. Die Kühlungsvorrichtung 14 sowie der Fahrmotor 1 und das Getriebe 3 sind somit zwischen den Rädern 9 angeordnet, wobei die Räder 9 zwischen den Längsträgern 8 angeordnet sind. Die Kühlungsvorrichtung 14 ist durch eine Stromleitung 25 elektrisch mit dem Kühlungsumrichter 20 verbunden. Der Kühlungsumrichter 20 ist mit der weiteren Stromversorgung (nicht dargestellt) des Schienenfahrzeugs (nicht dargestellt)verbunden. Somit ist der Kühlungsvorrichtung 14 ein Kühlungsstromrichter 20 zugeordnet. Der Kühlungsumrichter 20 kann auf einem Drehgestell angeordnet sein. Der Kühlungsumrichter 20 kann auch in einem anderen Bereich des Schienenfahrzeugs ausgebildet sein.

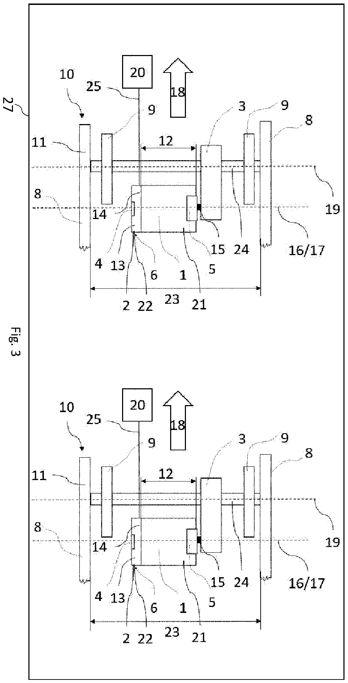

Die Figur 3 zeigt einen Schienenfahrzeugwagen 27 mit zwei angetriebenen Drehgestellen 10. Die zwei Drehgestelle 10 sind identisch ausgebildet. Die Details der zwei Drehgestelle 10 sind der Figur 2 sowie der Figurenbeschreibung zu der Figur 2 zu entnehmen. Jedem Drehgestell 10 des Schienenfahrzeugwagens 27 ist ein Kühlungsumrichter 20 zugeordnet. Der Schienenfahrzeugwagen 27 umfasst somit pro Drehgestell 10 eine Kühlungsvorrichtung 14 sowie einen Kühlungsumrichter 20. Jeder Kühlungsvorrichtung 14 ist somit ein Kühlungsvorrichter 20 zugeordnet.

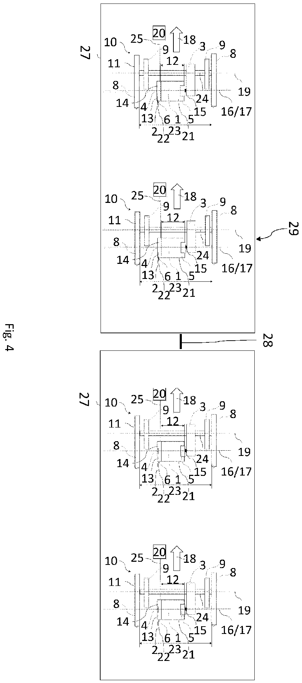

Figur 4 zeigt ein Schienenfahrzeug 29 mit zwei Schienenfahrzeugwagen 27. Die Schienenfahrzeugwagen 27 sind mittels einer Kupplung 28 verbunden. Die Schienenfahrzeugwagen 27 sind ausgebildet wie der Schienenfahrzeugwagen 27 aus der Figur 3. Die Details der Schienenfahrzeugwagen 27 sind somit der Figur 3 sowie der Figurenbeschreibung zu der Figur 3 zu entnehmen. Jeder Schienenfahrzeugwagen 27 weist zwei Drehgestelle 10 analog zu der Figur 2 auf. Die Details der Drehgestelle 10 sind somit der Figur 2 und der Figurenbeschreibung zu der Figur 2 zu entnehmen. Zwei Schienenfahrzeugwagen 27 bilden in diesem Beispiel somit ein Schienenfahrzeug 29. Die zwei Schienenfahrzeugwagen 27 sind jeweils angetrieben. Es ist möglich, dass die zwei Schienenfahrzeugwagen 27 Endwagen eines Schienenfahrzeugs 29 sind und sich zwischen den zwei Schienenfahrzeugwagen 27, welche als Endwagen ausgebildet sind, noch ein oder mehrere nicht angetriebene Schienenfahrzeugwagen 27 befinden. Es ist auch möglich, dass ein Schienenfahrzeug 29 ausschliesslich aus angetriebenen Schienenfahrzeugwagen ausgebildet sind. Die angetriebenen Schienenfahrzeugwagen 27 können auch als Mittelwagen ausgebildet sein. Dann sind vor und hinter dem Schienenfahrzeugwagen in Fahrtrichtung weitere nicht angetriebene Wagen ausgebildet. Es ist auch möglich, dass ein Schienenfahrzeugwagen 27 ein angetriebenes Drehgestell 10 aufweist sowie ein nicht angetriebenes Drehgestell 10.

## Patentansprüche

1. Drehgestell (10) für ein Schienenfahrzeug (29), umfassend einen Drehgestellrahmen (11) mit zwei Längsträgern (8), einen Fahrmotor (1) mit einer Motorwelle (15), wobei der Fahrmotor (1) zwischen den Längsträgern (8) angeordnet ist, eine Kühlungsvorrichtung (14), durch welchen der Fahrmotor (1) kühlbar ist, wobei die Kühlungsvorrichtung (14) einen Ventilator (2) und einen von einer Drehzahl der Motorwelle unabhängig betreibbaren Ventilatorantrieb (4) umfasst, wobei der Ventilatorantrieb (4) insbesondere als elektrischer Permanentmagnetmotor ausgebildet ist, **dadurch gekennzeichnet, dass** die Kühlungsvorrichtung (14) zwischen den Längsträgern (8) angeordnet ist.

2. Drehgestell (10) nach Anspruch 1, **dadurch gekennzeichnet, dass** die Motorwelle (15) eine erste Rotationsachse (16) aufweist und wobei der Ventilator (2) eine zweite Rotationsachse (17) aufweist, wobei die erste Rotationsachse (16) und die zweite Rotationsachse (17) im Wesentlichen orthogonal zur Fahrtrichtung (18) und bevorzugt parallel beabstandet oder identisch sind.

3. Drehgestell (10) nach einem der vorhergehenden Ansprüche, **dadurch gekennzeichnet, dass** der Fahrmotor (1) und/oder der Ventilator (2) und/oder der Ventilatorantrieb (4) zumindest teilweise zwischen zwei Rädern (9) einer Achse (24) des Drehgestells (10) angeordnet sind.

4. Drehgestell (10) nach Anspruch 3, **dadurch gekennzeichnet, dass** der Ventilatorantrieb (4) orthogonal zur Fahrtrichtung (18) näher an einem der Räder (9) angeordnet ist als der Fahrmotor (1) und der Ventilator (2).

5. Drehgestell (10) nach einem der vorhergehenden Ansprüche, **dadurch gekennzeichnet, dass** das Drehgestell (10) ein Getriebe (3) aufweist, welches die Motorwelle (15) und mindestens eine Radsatzwelle (24) mechanisch wirkverbindet, wobei der Fahrmotor (1) und der Ventilator (2) orthogonal zur Fahrtrichtung (18) zwischen dem Ventilatorantrieb (4) und dem Getriebe (3) angeordnet sind.

6. Drehgestell (10) nach einem der vorhergehenden Ansprüche, **dadurch gekennzeichnet, dass** die Kühlungsvorrichtung (14) durch einen Kühlungsumrichter (20) mit elektrischem Strom beaufschlagbar ist.

7. Drehgestell (10) nach Anspruch 6, **dadurch gekennzeichnet, dass** das Drehgestell (10) mehrere Kühlungsvorrichtungen (14) aufweist, wobei pro Kühlungsvorrichtung (14) jeweils ein Kühlungsumrichter (20) ausgebildet ist.

8. Drehgestell (10) nach einem der vorhergehenden Ansprüche, **dadurch gekennzeichnet, dass** der Fahrmotor (1) in einem Motorgehäuse (21) angeordnet ist, wobei der Ventilator (2) und der Ventilatorantrieb (4) in einem Kühlungsgehäuse (22) angeordnet sind, wobei das Motorgehäuse (21) und das Kühlungsgehäuse (22) fluidtechnisch verbunden sind, wobei das Kühlungsgehäuse (22) lösbar an dem Motorgehäuse (21) angeflanscht ist.

9. Drehgestell (10) nach Anspruch 8, **dadurch gekennzeichnet, dass** das Kühlungsgehäuse (22) einen axialen Lufteinlass (5) und einen radialen Luftauslass (6) aufweist.

10. Drehgestell (10) nach einem der vorhergehenden Ansprüche, **dadurch gekennzeichnet, dass** der Abstand (23) der Längsträger (8) in einer Richtung axial entlang der Motorwelle (15) 2.4-mal bis 3.6-mal und insbesondere 2.6-mal bis 3.4-mal so gross ist die die Ausdehnung des Fahrmotors (1) in einer Richtung axial entlang der Motorwelle (15).

11. Schienenfahrzeug (29) mit mindestens einem Drehgestell (10) nach einem der Ansprüche 1 bis 10.
